(19) Europäisches Patentamt
European Patent Office
Office européen des brevets

(11) **EP 2 337 127 A1**

(12) **EUROPEAN PATENT APPLICATION**
published in accordance with Art. 153(4) EPC

(43) Date of publication:
**22.06.2011 Bulletin 2011/25**

(21) Application number: **10818515.8**

(22) Date of filing: **24.06.2010**

(51) Int Cl.:
*H01M 4/86* (2006.01)    *H01M 4/88* (2006.01)
*H01M 8/10* (2006.01)

(86) International application number:
**PCT/JP2010/004189**

(87) International publication number:
**WO 2011/036834 (31.03.2011 Gazette 2011/13)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **28.09.2009 JP 2009223357**

(71) Applicant: **Panasonic Corporation
Kadoma-shi
Osaka 571-8501 (JP)**

(72) Inventor: **AKIYAMA, Takashi
Osaka-shi,
Osaka 540-6207 (JP)**

(74) Representative: **TBK
Bavariaring 4-6
80336 München (DE)**

(54) **DIRECT OXIDATION FUEL CELL**

(57)    The invention relates to a direct oxidation fuel cell. The invention intends to provide a fuel cell having good fuel utilization efficiency and good power generation performance such as voltage produced and power generation efficiency by suppressing the phenomenon of the fuel supplied from the fuel flow channel passing through the electrolyte membrane and being oxidized at the cathode. The direct oxidation fuel cell of the invention includes at least one unit cell which includes: a membrane electrode assembly including an anode, a cathode, and an electrolyte membrane interposed therebetween; an anode-side separator, and a cathode-side separator. The anode-side separator has a fuel flow channel for supplying a fuel to the anode. The anode has an anode catalyst layer including anode catalyst particles and a polymer electrolyte. The loading density of the anode catalyst particles in the anode catalyst layer is higher upstream than downstream of the fuel flow channel.

F I G. 3

**Description**

[Technical Field]

This invention relates to direct oxidation fuel cells such as direct methanol fuel cells, and more particularly to an improvement in the cell structure of a direct oxidation fuel cell.

[Background Art]

Fuel cells are classified into, for example, solid polymer fuel cells, phosphoric acid fuel cells, alkaline fuel cells, molten carbonate fuel cells, and solid oxide fuel cells, according to the kind of the electrolyte used. Among them, solid polymer fuel cells (PEFCs), which operate at low temperatures and have high output densities, are becoming commercially available as the power source for automobiles, home cogeneration systems, etc.

Recently, the use of fuel cells as the power source for portable small electronic devices, such as notebook personal computers, cellular phones, and personal digital assistants (PDAs), has been examined. Since fuel cells can generate power continuously if refueled, the use of fuel cells in place of secondary batteries, which need recharging, is expected to further improve the convenience of portable small electronic devices. PEFCs are also receiving attention as the power source for portable small electronic devices due to the low operating temperature as mentioned above.

Among PEFCs, direct oxidation fuel cells use a liquid fuel at room temperature. They generate electrical energy by directly oxidizing the fuel without reforming the fuel into hydrogen. Hence, direct oxidation fuel cells do not require a reformer and can be miniaturized. Also, among direct oxidation fuel cells, direct methanol fuel cells (DMFCs), which use methanol as the fuel, are regarded as the most promising power source for portable small electronic devices in terms of energy efficiency and output.

The reactions of DMFCs at the anode and the cathode are represented by the following reaction formulas (1) and (2), respectively. Oxygen introduced into the cathode is usually taken in from the air.

$$\text{Anode: } CH_3OH + H_2O \rightarrow CO_2 + 6H^+ + 6e^- \qquad (1)$$

$$\text{Cathode: } 3/2 O_2 + 6H^+ + 6e^- \rightarrow 3H_2O \qquad (2)$$

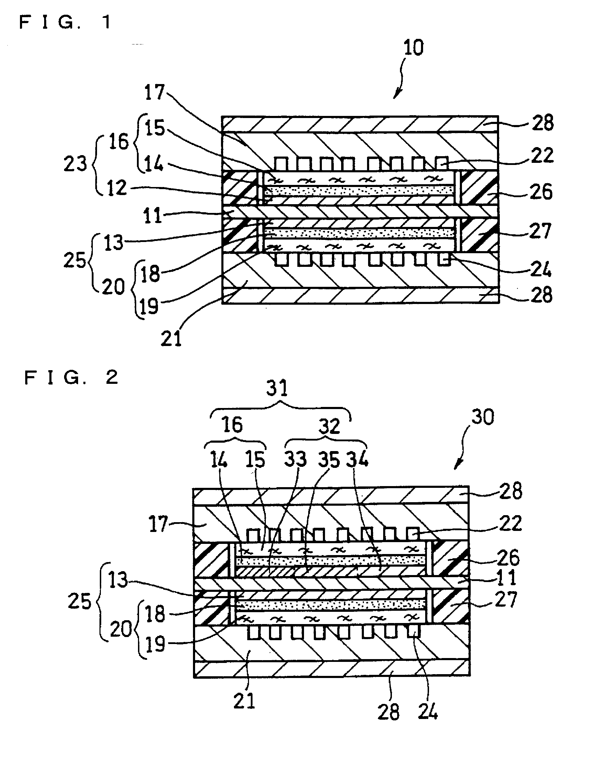

Solid polymer fuel cells such as DMFCs have a structure shown in, for example, FIG 1. FIG 1 shows the typical structure of a conventional solid polymer fuel cell.

A fuel cell 10 of FIG. 1 includes an electrolyte membrane 11, and an anode 23 and a cathode 25 disposed so as to sandwich the electrolyte membrane 11. The anode 23 includes an anode catalyst layer 12 and an anode diffusion layer 16. The anode catalyst layer 12 is in contact with the electrolyte membrane 11. The anode diffusion layer 16 includes an anode micro porous water-repellent layer 14 and an anode porous substrate 15. The anode water-repellent layer 14 and the anode porous substrate 15 are laminated in this order on the face of the anode catalyst layer 12 opposite to the face in contact with the electrolyte membrane 11. Laminated on the outer side of the anode diffusion layer 16 is an anode-side separator 17.

The cathode 25 includes a cathode catalyst layer 13 and a cathode diffusion layer 20. The cathode catalyst layer 13 is in contact with the face of the electrolyte membrane 11 opposite to the face in contact with the anode catalyst layer 12. The cathode diffusion layer 20 includes a cathode water-repellent layer 18 and a cathode porous substrate 19. The cathode water-repellent layer 18 and the cathode porous substrate 19 are laminated in this order on the face of the cathode catalyst layer 13 opposite to the face in contact with the electrolyte membrane 11. Laminated on the outer side of the cathode diffusion layer 20 is a cathode-side separator 21.

A laminate comprising the electrolyte membrane 11, the anode 23, the cathode 25, the anode-side separator 17, and the cathode-side separator 21 constitutes a basic structure called a cell. A laminate comprising the electrolyte membrane 11 and the anode catalyst layer 12 and the cathode catalyst layer 13 sandwiching the electrolyte membrane 11, where the power of the fuel cell is generated, is called a CCM (Catalyst Coated Membrane). Also, a laminate comprising the CCM, the anode diffusion layer 16, and the cathode diffusion layer 20 is called a membrane electrode assembly (MEA). The anode diffusion layer 16 and the cathode diffusion layer 20 allow the supplied fuel and oxidant to be uniformly dispersed, and allow the produced water and carbon dioxide to be smoothly removed.

Also, in the fuel cell 10 of FIG 1, the face of the anode-side separator 17 in contact with the anode porous substrate 15 has a groove-like fuel flow channel 22 for supplying a fuel to the MEA. The face of the cathode-side separator 21 in contact with the cathode porous substrate 19 has a groove-like oxidant flow channel 24 for supplying an oxidant such as air to the MEA.

Further, in the fuel cell 10, a gasket 26 is fitted between the anode-side separator 17 and the electrolyte membrane 11 so as to seal the anode 23, while a gasket 27 is fitted between the cathode-side separator 21 and the electrolyte membrane 11 so as to seal the cathode 25. The gaskets 26 and 27 prevent the fuel and the oxidant from leaking to outside. The cell comprising the MEA and the anode-side separator 17 and the cathode-side separator 21 disposed on both sides thereof is compressed and clamped with bolts, springs, etc. (not shown), with an end plate 28 disposed on the outer side of each separator.

Direct oxidation fuel cells such as DMFCs currently have a technical problem to be solved. That is, a liquid fuel (e.g., methanol aqueous solution) supplied from the fuel flow channel passes through the anode 23 and the electrolyte membrane 11, reaches the cathode 25, and is oxidized in the cathode catalyst layer 13. This phenomenon, which is called fuel crossover, or methanol crossover (MCO) in DMFCs, must be suppressed. This phenomenon occurs because the liquid fuel used is often water-soluble and tends to permeate the electrolyte membrane which easily absorbs water.

If fuel crossover occurs, i.e., if the fuel migrates to the cathode 25 without being consumed in the anode, the fuel utilization efficiency decreases. Further, the oxidation reaction of the fuel in the cathode 25 competes with the cathode reaction, i.e., the reduction reaction of the oxidant (oxygen gas), thereby lowering the potential of the cathode 25. Hence, fuel crossover results in lowered voltage, decreased power generation efficiency, etc.

Thus, for example, in the field of DMFCs, electrolyte membranes with suppressed methanol permeation amount have been actively developed to reduce MCO. Since currently available electrolyte membranes conduct protons through the water present in the membrane, water is indispensable for electrolyte membranes. Methanol has high affinity with water, and it is thus not possible to sufficiently prevent methanol from passing through the electrolyte membrane together with water.

The movement of the liquid fuel in the electrolyte membrane 11 is due mainly to concentration diffusion. It is thus known that the degree of fuel crossover is significantly dependent on the difference in the fuel concentration between the surface of the electrolyte membrane 11 on the anode 23 side and the surface on the cathode 25 side. The fuel concentration on the surface of the electrolyte membrane 11 on the cathode 25 side is believed to be negligibly small, since the crossover fuel is promptly oxidized at the cathode 25. Thus, the amount of fuel crossover is significantly dependent on the fuel concentration on the surface of the electrolyte membrane 11 on the anode 23 side.

In the anode 23, the diffusion rate of the fuel supplied from the fuel flow channel 22 is controlled by the diffusion resistance of the anode water-repellent layer 14. Further, the fuel is consumed by the oxidation reaction in the anode catalyst layer 12. Hence, the fuel concentration on the surface of the electrolyte membrane 11 on the anode 23 side generally seemed to be very low, compared with the fuel concentration in the fuel flow channel 22.

Meanwhile, the distribution of the fuel concentration in the plane parallel to the main surfaces of the electrolyte membrane 11 is considered below. The fuel concentration in the fuel flow channel 22 is highest at the inlet of the fuel flow channel 22, lowers gradually as the fuel flows in the fuel flow channel 22, and becomes lowest at the outlet of the fuel flow channel 22. That is, upstream of the fuel flow channel, the fuel concentration on the surface of the electrolyte membrane 11 on the anode 23 side is relatively high, and thus the amount of fuel crossover is large. On the other hand, downstream thereof, the fuel concentration in the fuel flow channel 22 is significantly low, compared with that upstream of the fuel flow channel. Hence, the fuel diffusion in the anode catalyst layer 12 needs to be improved to heighten the fuel concentration around the anode catalyst, thereby reducing a voltage drop due to concentration overvoltage and suppressing an output decrease.

To solve the above technical problem, PTL 1 proposes changing the composition and thickness of the anode water-repellent layer between upstream and downstream of the fuel flow channel. PTL 1 states that such configuration can lower the fuel permeability upstream of the fuel flow channel and reduce the amount of methanol crossover.

Also, PTL 2, which is not directed to a DMFC, discloses a fuel cell using hydrogen gas as the fuel gas, wherein the thickness of the catalyst layer is decreased from upstream of the fuel gas toward downstream.

[Citation List]

[Patent Literatures]

[PTL 1] Japanese Laid-Open Patent Publication No. 2002-110191
[PTL 2] Japanese Laid-Open Patent Publication No. 2009-9724

[Summary of Invention]

[Technical Problem]

The water-repellent layer is usually as thin as approximately 10 to 50 $\mu$m. It is thus difficult to control the permeability of liquid fuel such as methanol in the anode by merely changing the thickness of the water-repellent layer.

The reason is that since the water-repellent layer is thin, the difference in the fuel concentration between the face of the water-repellent layer on the flow channel side and the face on the catalyst layer side is small, and the force causing diffusion of liquid fuel is small. Therefore, changing the composition, etc. of the water-repellent layer between upstream and downstream of the fuel flow channel as in PTL 1 has a small effect on the permeability of liquid fuel. In particular, when the concentration of the fuel supplied is high, or when the cell operating temperature is high, the diffusion rate of the liquid fuel becomes high. It is thus very difficult to control the permeability of the liquid fuel merely by modifying the water-repellent layer.

An object of the invention is to provide a fuel cell having high fuel utilization efficiency and high power generation performance such as voltage produced and power generation efficiency by making the amount of fuel consumed upstream of the fuel flow channel larger than the amount consumed downstream and suppressing fuel crossover.

[Solution to Problem]

A direct oxidation fuel cell according to one aspect of the invention includes at least one unit cell which includes: a membrane electrode assembly including an anode, a cathode, and an electrolyte membrane interposed between the anode and the cathode; an anode-side separator in contact with the anode; and a cathode-side separator in contact with the cathode. The anode-side separator has a fuel flow channel for supplying a fuel to the anode, and the cathode-side separator has an oxidant flow channel for supplying an oxidant to the cathode. The anode includes an anode catalyst layer in contact with the electrolyte membrane and an anode diffusion layer in contact with the anode-side separator. The anode catalyst layer includes anode catalyst particles and a polymer electrolyte, and the loading density of the anode catalyst particles in the anode catalyst layer is higher upstream than downstream of the fuel flow channel.

[Advantageous Effects of Invention]

According to the invention, by making the loading density of the anode catalyst particles in the anode catalyst layer upstream of the fuel flow channel higher than the loading density of the anode catalyst particles downstream, more fuel can be consumed upstream of the fuel flow channel in the anode catalyst layer than downstream. As a result, upstream of the fuel flow channel in the anode catalyst layer, the fuel concentration at the interface between the anode catalyst layer and the electrolyte membrane can be lowered, compared with conventional techniques. Hence, fuel crossover can be reduced. That is, the difference in the fuel concentration between a first interface between the anode catalyst layer and the anode diffusion layer and a second interface between the anode catalyst layer and the electrolyte membrane can be increased upstream of the fuel flow channel in the anode catalyst layer, while it can be decreased downstream of the fuel flow channel in the anode catalyst layer.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

FIG 1 is a schematic longitudinal sectional view of an example of the structure of a conventional solid polymer fuel cell;
FIG 2 is a schematic longitudinal sectional view of a direct oxidation fuel cell according to one embodiment of the invention;
FIG 3 is a schematic front view of an anode catalyst layer included in a direct oxidation fuel cell according to one embodiment of the invention; and
FIG 4 is a schematic view of an example of the structure of a spray coater used to form a catalyst layer.

[Description of Embodiments]

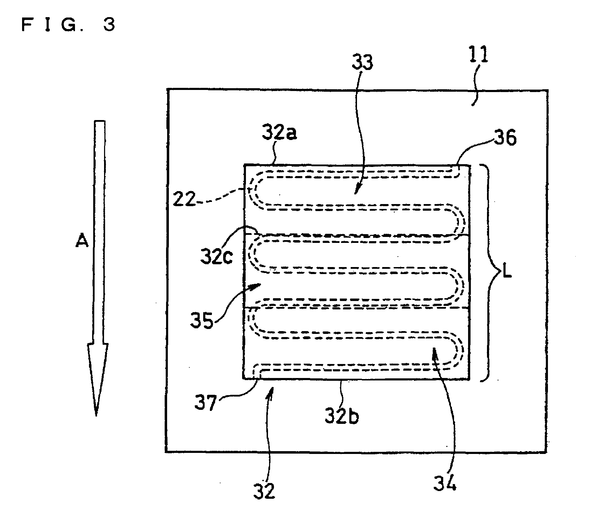

A direct oxidation fuel cell according to this embodiment is hereinafter described with reference to drawings. FIG 2 is a schematic longitudinal sectional view of a fuel cell according to one embodiment of the invention. FIG 3 is a schematic front view of an anode catalyst layer included in a direct oxidation fuel cell according to one embodiment of the invention. In FIGs. 2 and 3, the same components as those of FIG 1 are given the same numbers. FIG 3 illustrates an anode catalyst layer 32 carried on an electrolyte membrane 11. FIG 3 also illustrates a serpentine fuel flow channel 22 facing the anode catalyst layer 32 by using the dotted line.

A fuel cell 30 of FIG 2 includes an anode 31, a cathode 25, and an electrolyte membrane 11 interposed therebetween. The electrolyte membrane 11 has proton conductivity. An anode-side separator 17 is laminated on the face of the anode 31 opposite to the face in contact with the electrolyte membrane 11. A cathode-side separator 21 is laminated on the face of the cathode 25 opposite to the face in contact with the electrolyte membrane 11. Further, a gasket 26 is fitted between the anode-side separator 17 and the electrolyte membrane 11 so as to seal the anode 31, while a gasket 27 is fitted between the cathode-side separator 21 and the electrolyte membrane 11 so as to seal the cathode 25. The gaskets 26 and 27 prevent the fuel and oxidant from leaking to outside.

The anode-side separator 17 has a fuel flow channel 22 for distributing a fuel in parallel with the main surfaces of the electrolyte membrane 11. The fuel flow channel 22 has at least a pair of a fuel inlet and a fuel outlet. For the sake of simplicity, the following describes an embodiment in which the anode-side separator 17 has a fuel inlet 36 and a fuel outlet 37 and the fuel flows from the fuel inlet 36 toward the fuel outlet 37 in only one direction. The invention is not limited to this embodiment.

The anode 31 has an anode catalyst layer 32 in contact with the electrolyte membrane 11 and an anode diffusion layer 16 in contact with the anode-side separator 17. The anode catalyst layer 32 includes anode catalyst particles for promoting the reaction represented by the reaction formula (1) and a polymer electrolyte for providing ion conductivity between the anode catalyst layer 32 and the electrolyte membrane 11.

In this embodiment, the loading density of the anode catalyst particles in the anode catalyst layer is higher upstream than downstream of the fuel flow channel. The loading density of the anode catalyst particles may decrease continuously from upstream of the fuel flow channel toward downstream, or may decrease in stages. The loading density of the anode catalyst particles is preferably changed in stages. In this case, the production process of the anode catalyst layer becomes easy and the loading density of the anode catalyst particles can be easily controlled. Preferably, the loading density of the anode catalyst particles is changed, for example, in 2 to 10 stages. More preferably, it is changed in 2 to 5 stages.

In both cases of changing the loading density of the anode catalyst particles in stages and changing it continuously, by making the loading density of the anode catalyst particles higher upstream than downstream of the fuel flow channel, the fuel can be consumed promptly in a part of the anode catalyst layer 32 facing an upstream part of the fuel flow channel 22 where the fuel concentration is high. As a result, in the part of the anode catalyst layer 32 facing an upstream part of the fuel flow channel 22, the fuel concentration lowers significantly from a first interface between the anode catalyst layer 32 and the anode diffusion layer 16 toward a second interface between the anode catalyst layer 32 and the electrolyte membrane 11. Thus, the fuel concentration can be lowered at the interface between the electrolyte membrane 11 and the part of the anode catalyst layer 32 facing an upstream part of the fuel flow channel 22. It is therefore possible to suppress fuel crossover which tends to occur in the part of the anode catalyst layer 32 facing an upstream part of the fuel flow channel 22.

Examples of the anode catalyst particles include an alloy of platinum (Pt) and ruthenium (Ru), a mixture of Pt and a ruthenium oxide, a ternary alloy of Pt, Ru, and another metal element (e.g., iridium (Ir)), and platinum simple substance. In the alloy of Pt and Ru, the atomic ratio of Pt to Ru is, preferably, but not limited to, 1:1. The anode catalyst particles preferably include at least one selected from platinum simple substance and an alloy of platinum and ruthenium.

Examples of the polymer electrolyte contained in the anode catalyst layer 32 include perfluorosulfonic acid /polytetrafluoroethylene copolymer ($H^+$ type), sulfonated polyether sulfone ($H^+$ type), and aminated polyether sulfone ($OH^-$ type).

A part of the anode catalyst layer 32 facing an upstream part of the fuel flow channel 22 preferably has a high loading density region in which the loading density of the anode catalyst particles is 0.5 to 2 $g/cm^3$. Further, a part of the anode catalyst layer 32 facing a downstream part of the fuel flow channel 22 preferably has a low loading density region in which the loading density of the anode catalyst particles is 0.1 to 1 $g/cm^3$. This is described with reference to FIG 3. FIG 3 shows an embodiment in which the loading density of the anode catalyst particles is decreased in stages.

The anode catalyst layer 32 of FIG 3 includes a high loading density region (first region) 33 in which the loading density of the anode catalyst particles is 0.5 to 2 $g/cm^3$ and a low loading density region (second region) 34 in which the loading density of the anode catalyst particles is 0.1 to 1 $g/cm^3$. The first region 33 is positioned upstream of the fuel flow channel 22 in the anode catalyst layer 32, and the second region 34 is positioned downstream of the fuel flow channel 22 in the anode catalyst layer 32. In the anode catalyst layer 32 of FIG 3, between the first region 33 and the second region 34 is a middle loading density region (third region) 35 in which the loading density of the anode catalyst particles is between that of the first region 33 and that of the second region 34. In the anode catalyst layer 32 of FIG 3, the anode catalyst layer 32 is divided into three regions, and the loading density of the anode catalyst particles in each region is changed. However, the number of the divided regions of the anode catalyst layer can be any number of 2 or more.

As described above, the loading density of the anode catalyst particles in the first region 33 is preferably 0.5 to 2 $g/cm^3$. The loading density of the anode catalyst particles can be determined according to, for example, the amount of the polymer electrolyte contained in the anode catalyst layer 32, the porosity of the anode catalyst layer 32, and, in the case of the anode catalyst particles supported on a support, the support ratio of the anode catalyst particles. In a part of the anode catalyst layer 32 upstream of the fuel flow channel, the fuel concentration is kept relatively high.

Therefore, the proton and electron conductive network formed by the polymer electrolyte is important for promoting the anode reaction. To provide high proton and electron conductivity, the suitable loading density of the anode catalyst particles in the first region 33 is 0.5 to 2 $g/cm^3$.

The loading density of the anode catalyst particles in the second region 34 is preferably 0.1 to 1 $g/cm^3$. Since the fuel concentration is low in a part of the anode catalyst layer 32 downstream of the fuel flow channel, it is necessary to maximize the fuel diffusion in that part and maintain the proton conductivity and the electron conductivity. To provide good fuel diffusion, the suitable loading density of the anode catalyst particles in the second region 34 is 0.1 to 1 $g/cm^3$.

The ratio of the loading density of the anode catalyst particles in the first region 33 to the loading density of the anode catalyst particles in the second region 34 is preferably 1.5 or more and more preferably 2 or more, since the effects of the invention can be sufficiently obtained.

The deterioration of power generation performance due to fuel crossover is largest in the region of the MEA corresponding to 1/6 to 1/3 of the entire length of the fuel flow channel from the upstream end of the fuel flow channel when the entire length of the fuel flow channel is defined as 1. Therefore, the first region 33 of the anode catalyst layer 32 preferably faces 1/6 to 1/3 of the entire length of the fuel flow channel 22 upstream of the fuel flow channel 22. That is, the first region 33 preferably faces 1/6 to 1/3 of the entire length of the fuel flow channel from the fuel inlet 36 of the fuel flow channel 22. For example, as illustrated in FIG 3, the channel inlet 36 is provided on an upstream side 32a of the anode catalyst layer 32 having a square shape whose sides have a length L, while the fuel outlet 37 is provided on a downstream side 32b parallel thereto, and the direction of the overall fuel flow (the average direction in which the fuel concentration decreases) is represented by an arrow A. In this case, the rectangular region whose length in the direction A from the side 32a is L/6 to L/3 can be used as the first region 33 of the anode catalyst layer 32. When the anode catalyst layer 32 is composed of the first region 33 and the second region 34 with the first region 33 occupying the above-mentioned region, the second region 34 occupies the remaining region of the anode catalyst layer 32.

When a third region 35 is provided between the first region 33 and the second region 34, the loading density Dm of the anode catalyst particles in the third region 35 is selected suitably according to the loading density Du of the anode catalyst particles in the first region 33 and the loading density Dd of the anode catalyst particles in the second region 34. For example, Dm can be selected so that the difference (Du-Dm) is almost equal to the difference (Dm-Dd). Alternatively, it can be selected so that the difference (Du-Dm) is larger than the difference (Dm-Dd), or can be selected so that the difference (Dm-Dd) is larger than the difference (Du-Dm). Also, when the third region 35 is composed of a plurality of regions, the loading densities of the anode catalyst particles in the respective regions of the third region 35 can also be selected suitably.

The loading density of the anode catalyst particles can be controlled by adjusting, for example, the porosity of the anode catalyst layer and the content of the polymer electrolyte, as described above. For example, by increasing the porosity of a predetermined region of the anode catalyst layer, the loading density of the anode catalyst particles in that region can be decreased. The porosity of the anode catalyst layer, for example, when the anode catalyst layer is produced by using an ink for forming the anode catalyst layer, can be controlled by adding a pore-forming agent to the ink and adjusting the amount thereof.

Also, when the ink is applied by spraying, the loading density of the anode catalyst particles can also be controlled by adjusting the ink spray rate and the drying rate.

The anode catalyst layer 32 preferably includes at least one of: a supported catalyst comprising a conductive carbon material and anode catalyst particles supported on the conductive carbon particles; and anode catalyst particles not supported on a conductive carbon material (hereinafter referred to as unsupported catalyst particles).

For example, the anode catalyst particles may be used without being supported on a support. The anode catalyst layer 32 can include only a supported catalyst comprising, for example, a conductive carbon material and anode catalyst particles supported thereon. In this case, it is preferable to make the ratio of the anode catalyst particles supported on the conductive carbon particles higher upstream than downstream of the fuel flow channel to make the loading density of the anode catalyst particles higher upstream than downstream of the fuel flow channel. For example, preferably, the first region 33 includes a first supported catalyst, the second region 34 includes a second supported catalyst, and the support ratio of the anode catalyst particles of the first supported catalyst is higher than the support ratio of the anode catalyst particles of the second supported catalyst.

Alternatively, the anode catalyst layer 32 can include both unsupported catalyst particles and a supported catalyst comprising conductive carbon particles and anode catalyst particles supported thereon. In this case, the mass ratio of the unsupported catalyst particles to the total of the supported catalyst and the unsupported catalyst particles is preferably higher upstream than downstream of the fuel flow channel.

As used herein, the support ratio refers to the mass ratio of the anode catalyst particles to the total of the anode catalyst particles and the conductive carbon particles. The anode catalyst particles refer to a catalyst including one or more metal elements. For example, the anode catalyst particles refer to a catalyst comprising a metal simple substance or a metal compound catalyst such as a metal oxide or alloy.

As described above, the anode catalyst particles comprise an alloy including platinum (Pt) and ruthenium (Ru), a mixture of Pt and Ru, or the like. To increase the active sites of the anode catalyst particles and increase the reaction rate, it is preferable to minimize the size of the anode catalyst particles for use. The average particle size of the anode catalyst particles is usually in the range of 1 to 20 nm. In the case of unsupported catalyst fine particles, the particles agglomerate to form agglomeration. For example, even when the primary particles of catalyst particles are small, the agglomerated secondary particles become several tens of times as large as the primary particles. Hence, the active surface area of the catalyst particles, which affects the reaction rate, does not become sufficiently large. It is therefore preferable for unsupported catalyst particles to be supported on the surfaces of conductive carbon particles with a sufficiently large surface area to ensure a sufficient active surface area.

In the case of using a supported catalyst comprising an anode catalyst supported on conductive carbon particles, the loading density of the anode catalyst particles tends to lower since the conductive carbon particles are very bulky. In the case of using a supported catalyst, it is thus difficult to increase the amount of the anode catalyst particles loaded in the anode catalyst layer without increasing the thickness of the anode catalyst layer.

The relationship between the active surface area and the loading density can be controlled by changing the support ratio of the anode catalyst particles of the supported catalyst. This is because if the support ratio of the anode catalyst particles is increased, the adjacent anode catalyst particles are joined to form large anode catalyst particles in the production process of the supported catalyst, thereby resulting in poor dispersion of the anode catalyst particles on the surfaces of the conductive carbon particles. That is, the use of a supported catalyst with a high support ratio makes it possible to increase the loading density of the anode catalyst particles, although it does not make the active surface area so large. On the other hand, the use of a supported catalyst with a low support ratio provides a large active surface area, but cannot increase the loading density of the anode catalyst particles. Such tendency holds true for unsupported catalyst particles, and unsupported catalyst particles can be regarded as having a high support ratio, i.e., a support ratio of 100%.

Even when the anode catalyst layer 32 includes only a supported catalyst, the loading density of the anode catalyst particles in the first region 33 is preferably 0.5 to 2.0 mg/cm$^3$. Also, the loading density of the anode catalyst particles in the second region 34 is preferably 0.1 to 1.0 mg/cm$^3$.

In this case, also, the ratio of the loading density of the anode catalyst particles in the first region 33 to the loading density of the anode catalyst particles in the second region 34 is preferably 1.5 or more, and more preferably 2 or more.

When the anode catalyst layer 32 includes only a supported catalyst, for example, the first region 33 contains a first supported catalyst, and the second region 34 contains a second supported catalyst. The support ratio of the anode catalyst particles of the first supported catalyst is preferably 60 to 99%, and more preferably 60 to 80%. The density of the anode catalyst particles is significantly high, compared with the density of conductive carbon particles such as carbon, which is a common catalyst support for fuel cells. Thus, the use of a supported catalyst with a higher support ratio makes it possible to make the loading density of the anode catalyst particles higher. The conductive carbon particles used as the support comprise primary particles with a diameter of 5 to 50 nm and have a relatively large surface area. Hence, in the process of preparing a catalyst layer, a major part of the polymer electrolyte, which provides proton conductivity, tends to adsorb to the surfaces of the conductive carbon particles in the catalyst ink. As such, as the amount of the conductive carbon particles increases, the amount of necessary polymer electrolyte increases. To secure high proton and electron conductivity and promote the anode reaction, it is preferable to increase the support ratio of the anode catalyst particles of the first supported catalyst to 60 to 99%.

The support ratio of the anode catalyst particles of the second supported catalyst is preferably 20 to 80%, and more preferably 40 to 70%. Generally, in the case of dispersing anode catalyst particles on conductive carbon particles, decreasing the support ratio makes it possible to decrease the size of the anode catalyst particles. This is because when the support ratio is high, the adjacent catalyst particles agglomerate and stick together to make the size of the catalyst particles larger in the process of preparing catalyst particles. Also, the activity of the catalyst becomes higher as the surface area increases. Thus, as the particle size of the catalyst decreases, i.e., as the support ratio of the supported catalyst decreases, the activity per unit catalyst amount becomes higher. Therefore, in a region of the anode catalyst layer downstream of the fuel where the loading density of the anode catalyst particles does not need to be increased, it is effective to decrease the support ratio of the anode catalyst particles of the supported catalyst to obtain a relatively high activity with a small catalyst amount. As such, the suitable support ratio of the anode catalyst particles of the second supported catalyst is in the range of 20 to 80%.

Examples of conductive carbon particles include carbon black. The average particle size of the conductive carbon particles is preferably 5 to 50 nm in consideration of the size of the anode catalyst particles.

When the anode catalyst particles are supported on conductive carbon particles, the loading density of the anode catalyst particles can be controlled by adjusting the porosity of the anode catalyst layer, the content of the polymer electrolyte, the support ratio of the anode catalyst particles, etc.

As described above, the use of a first supported catalyst and a second supported catalyst with different support ratios of anode catalyst particles allows optimization of the active surface area of the anode catalyst particles and the loading density of the anode catalyst particles, upstream and downstream of the fuel flow channel, respectively. Specifically, when the first region 33 of the anode catalyst layer 32 upstream of the fuel flow channel contains a first supported catalyst with a high support ratio, the loading density of the anode catalyst particles can be increased and the fuel can be promptly consumed in the first region 33. This can suppress fuel crossover which tends to occur in a part of the anode catalyst layer facing an upstream part of the fuel flow channel. When the second region 34 of the anode catalyst layer 32 downstream of the fuel flow channel contains a second supported catalyst with a lower support ratio than the first supported catalyst, the active surface area of the anode catalyst particles can be made sufficiently large. Thus, the amount of the anode catalyst particles used in the second region 34 can be decreased. As a result, it is possible to further improve the power generation characteristics and fuel utilization rate of the fuel cell, while further suppressing an increase in the cost of the fuel cell.

When the anode catalyst layer 32 includes both a supported catalyst and unsupported catalyst particles, for example, the mass ratio of the unsupported catalyst particles to the total of the supported catalyst and the unsupported catalyst particles in the first region 33 is preferably higher than the mass ratio of the unsupported catalyst particles to the total of the supported catalyst and the unsupported catalyst particles in the second region 34.

In this case, also, the loading density of the anode catalyst particles in the first region 33 is preferably 0.5 to 2 $g/cm^3$, and the loading density of the anode catalyst particles in the second region 34 is preferably 0.1 to 1 $g/cm^3$. The ratio of the loading density of the anode catalyst particles in the first region 33 to the loading density of the anode catalyst particles in the second region 34 is preferably 1.5 or more, and more preferably 2 or more.

The mass ratio of the unsupported catalyst particles to the total of the supported catalyst and the unsupported catalyst particles in the first region 33 is preferably 5 to 99 mass%, and more preferably 30 to 90 mass%. The mass ratio of the unsupported catalyst particles to the total of the supported catalyst and the unsupported catalyst particles in the second region 34 is preferably 1 to 90 mass%, and more preferably 10 to 70 mass%.

As illustrated in FIG 3, when the anode catalyst layer is composed of three or more regions, the mass ratio of the unsupported catalyst particles to the total of the supported catalyst and the unsupported catalyst particles in the region(s) other than the first region 33 and the second region 34 can be selected suitably according to the mass ratio of the unsupported catalyst particles to the total of the supported catalyst and the unsupported catalyst particles in the first region 33 and the second region 34.

When a supported catalyst and unsupported catalyst particles are used in combination, the supported catalysts contained in the first region 33 and the second region 34 may be the same or different.

For example, when the supported catalysts contained in the first region 33 and the second region 34 are different, the first supported catalyst may be added to the first region 33, and the second supported catalyst may be added to the second region 34.

When the supported catalysts contained in the first region 33 and the second region 34 are the same, the support ratio of the anode catalyst particles of the supported catalyst is preferably 20 to 99%, and more preferably 60 to 80%. As described above, increasing the support ratio of the anode catalyst particles makes it possible to obtain a higher loading density, and decreasing the support ratio makes it possible to reduce the catalyst amount. For example, in the case of DMFCs, the support ratio of the anode catalyst particles is usually 50% or more. When unsupported catalyst particles and a supported catalyst are mixed for use, if the support ratio of the anode catalyst particles of the supported catalyst is in the range of 20% to 99%, the effects of the invention can be obtained, although it depends on the mixing ratio of the unsupported catalyst particles and the supported catalyst.

Also, the first region 33 may contain only unsupported catalyst particles. In this case, the second region 34 may contain only a supported catalyst or may contain both a supported catalyst and unsupported catalyst particles. When the second region 34 contains only a supported catalyst, the support ratio of the anode catalyst particles of the supported catalyst is preferably 20 to 80% in the same manner as described above. When the second region 34 contains both a supported catalyst and unsupported catalyst particles, the mass ratio of the unsupported catalyst particles to the total of the supported catalyst and the unsupported catalyst particles is preferably in the range of 1 to 90 mass% in the same manner as described above. Also, the support ratio of the anode catalyst particles of the supported catalyst is preferably 20 to 80%.

Even when the loading density of the anode catalyst particles changes continuously from upstream of the fuel flow channel toward downstream (e.g., in the direction of the arrow A), the loading density of the anode catalyst particles in the region (corresponding to the first region 33) of the anode catalyst layer 32 facing 1/6 to 1/3 of the entire length of the fuel flow channel 22 from the fuel inlet 36 of the fuel flow channel 22 is preferably 0.5 to 2 $g/cm^3$. The loading density of the anode catalyst particles in the remaining region (corresponding to the second region 34) of the anode catalyst layer 32 is preferably 0.1 to 1 $g/cm^3$. When the loading density of the anode catalyst particles changes continuously, the loading density of the anode catalyst particles refers to the average loading density of the anode catalyst particles contained in the respective regions. In this case, also, the ratio of the average loading density of the anode catalyst particles in the first region 33 to the average loading density of the anode catalyst particles in the second region 34 is preferably 1.5 or more, and more preferably 2 or more.

It should be noted that the fuel concentration is lower downstream of the fuel flow channel 22 than upstream of the fuel flow channel 22. Thus, in a part of the anode catalyst layer 32 facing a downstream part of the fuel flow channel 22, the concentration overvoltage due to lowered fuel concentration increases. As a result, the power output decreases due to a decrease in the voltage of the whole cell or a decrease in the current density.

For example, when the anode catalyst layer 32 contains only an unsupported catalyst, or contains both a supported catalyst and unsupported catalyst particles, the loading density of the anode catalyst particles in the part of the anode catalyst layer 32 facing a downstream part of the fuel flow channel 22 can be decreased. Hence, the porosity of that part can be increased. This can improve the fuel diffusion downstream of the fuel flow channel 22 in the anode catalyst layer 32 and consequently reduce the concentration overvoltage. Also, even when the anode catalyst layer 32 contains only a supported catalyst, the porosity of the anode catalyst layer 32 downstream of the fuel flow channel 22 can be adjusted by, for example, using a pore-forming agent.

Also, in this embodiment, the loading density of the anode catalyst particles in the anode catalyst layer 32 is made lower downstream of the fuel flow channel 22 than upstream. It is thus possible to reduce the amount of the very expensive anode catalyst used in the anode catalyst layer 32 downstream of the fuel flow channel 22.

When the anode catalyst layer 32 contains conductive carbon particles, the amount of the conductive carbon particles is preferably uniform throughout the anode catalyst layer 32.

It is generally believed that the amount of polymer electrolyte necessary for the proton conductivity of the anode catalyst layer is proportional to the amount of conductive carbon particles. In this respect, when the amount of conductive carbon particles is made uniform throughout the anode catalyst layer, the amount of polymer electrolyte can also be made uniform throughout the anode catalyst layer. This can ensure good proton conductivity throughout the anode catalyst layer.

The thickness of the anode catalyst layer 32 is preferably uniform throughout the anode catalyst layer 32.

As disclosed in PTL 2, when the amount of the anode catalyst is increased without changing the constituent materials of the anode catalyst layer and/or the structure of the anode catalyst layer, it is necessary to change the thickness of the anode catalyst layer. In fuel cells, the contact resistance between the respective layers is usually reduced by applying a pressure in the direction perpendicular to the main surfaces of the electrolyte membrane. For example, when the thickness of the anode catalyst layer changes significantly in the plane direction thereof, the pressure applied becomes uneven, thereby causing an increase in the contact resistance between the thinner portion of the anode catalyst layer and the electrolyte membrane and/or the contact resistance between the thinner portion of the anode catalyst layer and the anode diffusion layer and resulting in performance deterioration of the fuel cell. In this embodiment, the loading density of the anode catalyst particles in the anode catalyst layer is increased upstream of the fuel flow channel, while the loading density of the anode catalyst particles in the anode catalyst layer is lowered downstream of the fuel flow channel. This allows the thickness of the whole anode catalyst layer to be kept relatively uniform while changing the amount of the anode catalyst itself between upstream and downstream of the fuel flow channel. It is therefore possible to obtain a uniform contact resistance and high power generation performance.

The thickness of the anode catalyst layer is preferably 20 to 100 μm.

The loading density of the anode catalyst particles in a predetermined region of the anode catalyst layer can be measured, for example, as follows. First, the thickness of the predetermined region of the anode catalyst layer is measured with a micrometer. At this time, for example, the average value of thicknesses measured at predetermined several locations may be used as the thickness of the predetermined region. Next, the predetermined region (e.g., the first region) of the anode catalyst layer is scraped off. The dimensions of the scraped portion are accurately measured with an optical microscope or the like to determine the area of the predetermined region. In this case, also, the length and width of the scraped region may be measured at a plurality of locations to determine the average length and the average width, and the area of the predetermined region may be determined from the average length and the average width. From the thickness and the area determined in this manner, the volume of the predetermined region can be determined. It should be noted that in the case of a CCM, it is difficult to measure the thickness of only the anode catalyst layer with a micrometer. In this case, the thickness of the predetermined region may be determined by, for example, cutting in the vicinity of the scraped portion to expose a section and observing the section with an optical microscope, a scanning electron microscope (SEM), etc. In this case, also, for example, the average value of thicknesses measured at predetermined several locations may also be used.

Subsequently, the mass of the scraped sample is measured with a microbalance. The sample is then dissolved in aqua regia, and the undissolved mater is filtrated. The resultant filtrate is mixed with water to provide a predetermined amount (e.g., 100 ml). The amount of the anode catalyst particles contained in the resultant solution of predetermined amount is measured with an inductively coupled plasma-atomic emission spectrometer (ICP-AES; e.g., iCAP 6300 available from Thermo Fisher Scientific). Using the obtained value and the volume of the predetermined region, the loading density of the anode catalyst particles in the predetermined region of the anode catalyst layer can be determined.

Referring again to FIG 2, the constituent components other than the anode catalyst layer 32 are hereinafter described.

The cathode 25 has a cathode catalyst layer 13 in contact with the electrolyte membrane 11 and a cathode diffusion layer 20 in contact with the cathode-side separator 21. The cathode diffusion layer 20 has a cathode water-repellent layer 18 in contact with the cathode catalyst layer 13 and a cathode porous substrate 19 in contact with the cathode-side separator 21.

The cathode catalyst layer 13 includes a cathode catalyst for promoting the reaction represented by the reaction formula (2) and a polymer electrolyte for providing ion conductivity between the cathode catalyst layer 13 and the electrolyte membrane 11.

Examples of the cathode catalyst contained in the cathode catalyst layer 13 include Pt simple substance and Pt alloys. Examples of Pt alloys include alloys of Pt and a transition metal such as cobalt or iron. Such Pt alloys or Pt simple substance may be used in the form of fine powder, or may be supported on conductive carbon particles such as carbon black.

With respect to the polymer electrolyte contained in the cathode catalyst layer 13, materials mentioned as the polymer electrolyte contained in the anode catalyst layer 32 can be used.

The method for preparing the anode catalyst layer 32 and the cathode catalyst layer 13 is described.

The cathode catalyst layer 13 can be prepared, for example, as follows. Specifically, a cathode catalyst and a polymer electrolyte are dispersed in a suitable dispersion medium. The resultant ink is applied onto the electrolyte membrane 11 and dried to obtain the anode catalyst layer 13. Methods for application include, for example, a spraying method or a squeegee method.

The anode catalyst layer 32 with the above-described configuration can be produced by, for example, a process of preparing an anode catalyst layer using a pore-forming agent. Specifically, anode catalyst particles and a polymer electrolyte are dispersed in a predetermined dispersion medium to prepare an ink for forming an anode catalyst layer. The ink is mixed with a pore-forming agent for making pores in the anode catalyst layer. Such inks with different pore-forming agent amounts are prepared according to the number of the regions constituting the anode catalyst layer. At this time, the amount of the pore-forming agent in the ink for forming the first region is made the smallest, while that in the ink for forming the second region is made the largest. The respective inks are then applied onto the electrolyte membrane to obtain an anode catalyst layer precursor. The pore-forming agent is removed from the anode catalyst layer precursor to obtain an anode catalyst layer in which the loading densities of the anode catalyst particles upstream and downstream of the fuel flow channel are different.

Instead of the anode catalyst particles, it is also possible to use a supported catalyst comprising anode catalyst particles supported on conductive carbon particles or a mixture of a supported catalyst and anode catalyst particles.

The pore-forming agent can be, for example, a material which is decomposed by an acid. Examples of such materials include salts containing a metal such as nickel, an alkali metal, or an ammonium ion. An example of salts containing an alkali metal is lithium carbonate.

Alternatively, the anode catalyst layer 32 with the above-described configuration can be formed by applying one kind of ink for forming an anode catalyst layer onto the electrolyte membrane under different application conditions. For example, in the case of using a spray method, the first region 33 with a high anode-catalyst-particle loading density can be produced by increasing the ink spray rate and decreasing the drying rate. The second region 34 with a low anode-catalyst-particle loading density can be produced by decreasing the ink spray rate and increasing the drying rate.

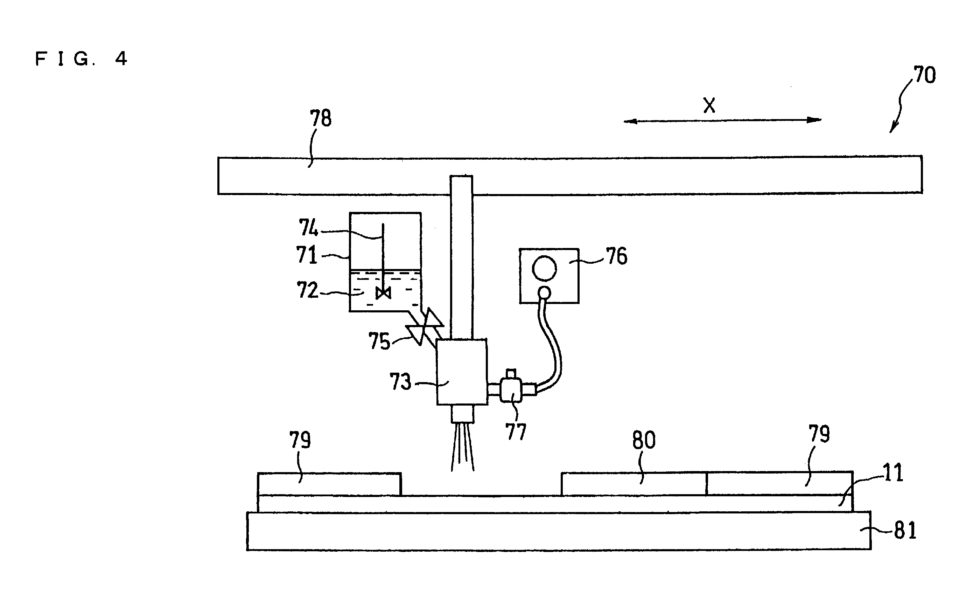

An example of a spray coater used in a spray method is described below. FIG 4 is a schematic side view of an example of the structure of a spray coater.

A spray coater 70 of FIG 4 is equipped with a tank 71 containing an ink 72 and a spray gun 73 for spraying the ink 72.

In the tank 71, the ink 72 is stirred by a stirrer 74 and constantly flowing. The ink 72 is fed to the spray gun 73 via an open/close valve 75, and sprayed from the spray gun 73 together with a spray gas. The spray gas is fed to the spray gun 73 via a gas pressure regulator 76 and a gas flow rate controller 77. The spray gas can be, for example, nitrogen gas. In the coater 70, the surface temperature of the electrolyte membrane 11 is controlled using a heater 81 disposed so as to contact the electrolyte membrane 11.

In the coater 70 of FIG 4, the spray gun 73, which is supported by an actuator 78, is capable of moving from a desired position at a desired speed in two directions of the X axis parallel to the arrow X and the Y axis perpendicular to the X axis and the plane of paper.

Using the spray gun 73, the ink 72 is sprayed onto the part of the electrolyte membrane 11 on which the first region 33 is to be disposed, and dried. At this time, the ink spray rate is increased, and the drying rate is decreased. The drying rate can be decreased by lowering the surface temperature of the electrolyte membrane 11.

The part of the electrolyte membrane 11 excluding the part on which the anode catalyst layer 32 is to be formed is covered with a mask 79, and the part of the electrolyte membrane 11 excluding the part on which the first region 33 is to be disposed is also covered with a mask 80. In this manner, the first region 33 can be formed.

The second region 34 can be formed by spraying the ink 72 from the spray gun 73 onto the part of the electrolyte membrane 11 on which the second region 34 is to be disposed and drying it. At this time, the ink spray rate is decreased and the drying rate is increased. The drying rate can be heightened by increasing the surface temperature of the electrolyte membrane 11.

When the anode catalyst layer is composed of three or more regions, the other region(s) than the first region and the second region can be formed basically in the same manner as described above. At this time, the ink spray rate and the drying rate can be selected suitably according to the number of the regions constituting the anode catalyst layer.

In the spray method, an air brush may be used in place of the spray gun 73.

In the above-described methods, the anode catalyst layer 32 may be formed on a predetermined resin sheet. Likewise, the cathode catalyst layer 13 may also be formed on a resin sheet.

In this case, the anode catalyst layer and the cathode catalyst layer which are formed on the resin sheets are transferred to the electrolyte membrane 11 by hot pressing. The anode catalyst layer 32 is transferred to one face of the electrolyte membrane 11, while the cathode catalyst layer 13 is transferred to the other face. The anode catalyst layer 32 and the cathode catalyst layer 13 may be transferred to the electrolyte membrane 11 simultaneously. Alternatively, it is also possible to transfer one catalyst layer and then transfer the other catalyst layer. A CCM can also be produced in this manner.

Also, in the above-described methods, the respective regions constituting the anode catalyst layer may be formed simultaneously or separately.

The constituent material of the electrolyte membrane 11 is not particularly limited if the electrolyte membrane 11 has ion conductivity. As such materials, for example, various polymer electrolyte materials known in the art can be used. Many of currently available electrolyte membranes are proton-conductive electrolyte membranes.

Examples of the electrolyte membrane 11 include fluorine-based polymer membranes. Examples of such fluorine-based polymer membranes include polymer membranes including a perfluorosulfonic acid polymer such as a perfluorosulfonic acid/polytetrafluoroethylene copolymer ($H^+$ type). An example of such a membrane including a perfluorosulfonic acid polymer is a Nafion membrane (trade name "Nafion®", available from E.I. Du Pont de Nemours & Co. Inc.).

The electrolyte membrane 11 preferably has the effect of reducing the crossover of the fuel (such as methanol) used in the fuel cell 30. Examples of electrolyte membranes having such effect include the above-mentioned fluorine-based polymer membranes, membranes comprising a fluorine-atom-free hydrocarbon polymer such as sulfonated polyether ether sulfone (S-PEEK), and composite membranes comprising inorganic and organic material.

The anode diffusion layer 16 includes a porous substrate 15 which has been subjected to a water-repellent treatment and a water-repellent layer 14 comprising a highly water-repellent material and being formed on a surface of the porous substrate 15. Likewise, the cathode diffusion layer 20 includes a porous substrate 19 which has been subjected to a hydrophobic treatment and a water-repellent layer 18 comprising a highly hydrophobic material and being formed on a surface of the porous substrate 19.

Examples of porous substrates used as the anode porous substrate 15 and the cathode porous substrate 19 include carbon paper comprising carbon fibers, carbon cloth, carbon non-woven fabric (carbon felt), corrosion-resistant metal mesh, and metal foam.

Examples of highly hydrophobic materials used to form the anode water-repellent layer 14 and the cathode water-repellent layer 18 include fluorine-based polymers and fluorinated graphite. An example of a fluorine-based polymer is polytetrafluoroethylene (PTFE).

The anode diffusion layer 16 and the cathode diffusion layer 20 can be produced as follows. First, for example, a highly hydrophobic material such as a fluorine-based polymer, a conductive material capable of forming a porous material, and a suitable dispersion medium are mixed and stirred. The resultant ink is applied onto a surface of a porous substrate which has been subjected to a water-repellent treatment. Methods for application include, for example, screen printing and a squeegee method. Examples of conductive materials capable of forming a porous material include carbon black (e.g., furnace black and acetylene black), a graphite powder, and a porous metal powder.

The anode diffusion layer 16 and the cathode diffusion layer 20 are bonded to the laminate (CCM) of the anode catalyst layer 32, the electrolyte membrane 11, and the cathode catalyst layer 13 by hot pressing. At this time, the anode diffusion layer 16 is bonded to the anode catalyst layer 32, while the cathode diffusion layer 20 is bonded to the cathode catalyst layer 13. In this manner, a membrane electrode assembly (MEA) comprising the anode 23, the electrolyte membrane 11, and the cathode 25 which are laminated in this order can be obtained.

The anode-side separator 17 and the cathode-side separator 21 are made of, for example, a carbon material such as graphite. The face of the anode-side separator 17 in contact with the anode 31 has the groove-like fuel flow channel 22 for supplying a fuel (e.g., methanol aqueous solution) to the anode 31. The face of the cathode-side separator 21 in contact with the cathode 25 has the groove-like oxidant flow channel 24 for supplying an oxidant (e.g., air or oxygen gas) to the cathode 25.

The fuel flow channel 22 of the anode-side separator 17 and the oxidant flow channel 24 of the cathode-side separator 21 can be formed by, for example, cutting a groove in a surface of the separator. Also, the fuel flow channel 22 and the oxidant flow channel 24 can also be formed together with the molding (e.g., injection molding or compression molding) of the separator itself.

Examples of constituent materials for the gaskets 26 and 27 include fluorine-based polymers such as polytetrafluoroethylene (PTFE) and tetrafluoroethylene-hexafluoropropylene copolymer (FEP), synthetic rubbers such as fluorocarbon rubber and ethylene-propylene-diene rubber (EPDM), and silicone elastomers.

Each of the gaskets 26 and 27 has an opening for locating the membrane electrode assembly (MEA) in the central part of the sheet made of such a material as described above, and the opening is as large as or slightly larger than the MEA. The gaskets 26 and 27 are disposed on the surfaces of the MEAso as to contact the side faces of the anode catalyst layer 12 and the cathode catalyst layer 13, respectively.

Further, the gaskets 26 and 27, together with the separators 17 and 21, pressurize the electrolyte membrane 11 in the thickness direction thereof.

The cell composed of the MEA and the anode-side separator 17 and the cathode-side separator 21 disposed on both sides of the MEAand sandwiched between two end plates 28 is pressurized and clamped with bolts, springs, etc. (not shown). The two end plates 28 are laminated on the anode-side separator 17 and the cathode-side separator 21, respectively.

The interface between the MEA and the pair of separators 17 and 21 has poor adhesion. However, by pressurizing and clamping the cell as described above, the adhesion between the MEAand the pair of separators 17 and 21 can be enhanced, and as a result, the contact resistance between the MEAand the pair of separators 17 and 21 can be reduced.

Also, a plurality of cells may be stacked to form a cell stack. In this case, the cell stack is also pressurized and clamped by end plates, bolts, springs, etc.

The fuel used in the direct oxidation fuel cell of this embodiment can be a liquid hydrocarbon such as methanol, ethanol, dimethyl ether, formic acid, or ethylene glycol. In particular, it is preferable to use an aqueous solution with a methanol concentration of 1 mol/L to 8 mol/L as the fuel. The methanol concentration of the methanol aqueous solution is more preferably 3 mol/L to 5 mol/L. As the fuel concentration becomes higher, the whole fuel cell system can be made smaller and more lightweight, but MCO may increase. However, the use of the above-described anode catalyst layer allows a reduction in MCO, thereby making it possible to use a methanol aqueous solution with a higher methanol concentration than conventional ones. When the methanol concentration is lower than 1 mol/L, it may be difficult to make the fuel cell system small and lightweight. If the methanol concentration is more than 8 mol/L, MCO may not be reduced sufficiently. The use of a fuel with such a methanol concentration can further ensure that a sufficient amount of methanol is supplied downstream of the fuel flow channel, while reducing MCO upstream of the fuel flow channel in the anode catalyst layer.

The use of the above-described anode catalyst layer makes it possible to provide a direct oxidation fuel cell which is improved in fuel utilization efficiency and power generation performance such as voltage produced and power generation efficiency.

[Examples]

The invention is hereinafter described specifically by way of Examples and Comparative Examples, but the invention is not to be construed as being limited to the following Examples.

[Example 1]

In this example, a fuel cell as illustrated in FIG 2 and FIG 3 was produced.

A supported anode catalyst comprising anode catalyst particles supported on a support was prepared. A platinum (Pt)-ruthenium (Ru) alloy (atomic ratio 1:1) (average particle size: 5 nm) was used as the anode catalyst particles. Conductive carbon particles with an average primary particle size of 30 nm were used as the support. The ratio of the mass of the Pt-Ru alloy to the total mass of the Pt-Ru alloy and the conductive carbon particles was set to 80 mass%.

A supported cathode catalyst comprising cathode catalyst particles supported on a support was prepared. Platinum (average particle size: 3 nm) was used as the cathode catalyst particles. Conductive carbon particles with an average primary particle size of 30 nm were used as the support. The ratio of the mass of platinum to the total mass of platinum and the conductive carbon particles was set to 80 mass%.

A 50 $\mu$m-thick fluorine-based polymer membrane (a film composed basically of a perfluorosulfonic acid /polytetrafluoroethylene copolymer (H$^+$ type), trade name "Nafion® 112", available from E.I. Du Pont de Nemours & Co. Inc.) was used as the electrolyte membrane 11.

10 g of the supported anode catalyst, 70 g of a dispersion containing a perfluorosulfonic acid /polytetrafluoroethylene copolymer (H$^+$ type) (trade name: Nafion dispersion, "Nafion® 5 wt% solution", available from E.I. Du Pont de Nemours & Co. Inc.), and a suitable amount of water were mixed and stirred. The resultant mixture was defoamed to prepare an ink for forming an anode catalyst layer.

The anode-catalyst-layer forming ink was sprayed onto a surface of the electrolyte membrane 11 by a spray method using an air brush. The shape of the anode catalyst layer 32 was made a square with sides of 60 mm. The anode catalyst layer 32 was composed of three rectangular regions of a size of 20 x 60 mm. The three regions from upstream toward the direction of the arrowAwere designated as the first region 33, the third region 35, and the second region 34, respectively. The formation of the anode catalyst layer 32 was started from the first region 33. The dimensions of the respective regions were adjusted by masking. For spraying, the electrolyte membrane 11 was fixed by vacuum, adsorbing onto a metal plate whose surface temperature was adjusted by a heater. The anode-catalyst-layerforming ink was timely dried during application.

The three regions were formed by using the same anode-catalyst-layerforming ink. The loading densities of the anode catalyst particles in the respective regions were changed by controlling the ink spray speed and the drying temperature. The ink spray speed was changed by adjusting the supply amount of spray gas and the degree of opening of the nozzle.

With respect to the application conditions for forming the first region 33 of the anode catalyst layer 32, the ink spray speed was set to 0.6 ml/min, and the drying temperature was set to 55°C. The thickness of the first region 33 was 63 $\mu$m. The amount of the anode catalyst particles (Pt-Ru alloy) contained in the first region 33 per unit area was 4 mg/cm$^2$, and the loading density of the anode catalyst particles in the first region 33 was 0.63 g/cm$^3$.

With respect to the application conditions for forming the third region 35 of the anode catalyst layer 32, the ink spray speed was set to 0.4 ml/min, and the drying temperature was set to 60°C. The thickness of the third region 35 was 61 $\mu$m. The amount of the anode catalyst particles contained in the third region 35 per unit area was 3 mg/cm$^2$, and the loading density of the anode catalyst particles in the third region 35 was 0.49 g/cm$^3$.

With respect to the application conditions for forming the second region 34 of the anode catalyst layer 32, the ink spray speed was set to 0.2 ml/min, and the drying temperature was set to 65°C. The thickness of the second region 34 was 60$\mu$m. The amount of the anode catalyst particles contained in the second region 34 per unit area was 2 mg/cm$^2$, and the loading density of the anode catalyst particles in the second region 34 was 0.33 g/cm$^3$.

As used herein, the amount of the anode catalyst particles per unit area refers to the amount of the anode catalyst contained per projected unit area of each region, and the projected unit area of each region refers to the unit area (cm$^2$) of each region viewed from the direction of the normal to the main surface of the anode catalyst layer.

An ink for forming a cathode catalyst layer was prepared as follows. 10 g of the supported cathode catalyst, 100 g of a dispersion containing a perfluorosulfonic acid /polytetrafluoroethylene copolymer (H$^+$ type) (trade name "Nafion® 5 wt% solution" as mentioned above), and a suitable amount of water were mixed and stirred. The resultant mixture was defoamed to prepare an ink for forming a cathode catalyst layer.

The cathode-catalyst-layer forming ink was sprayed onto the face of the electrolyte membrane 11 opposite to the face with the anode catalyst layer 32 formed thereon, to obtain the cathode catalyst layer 13 of a size of 60 mm x 60 mm. Spraying was performed in the same manner as in the anode catalyst layer. The region to be sprayed with the cathode-catalyst-layer forming ink was adjusted by masking.

The anode catalyst layer 32 and the cathode catalyst layer 13 were disposed so that their centers (the points of intersection of diagonal lines of the catalyst layers) were positioned in a straight line parallel to the thickness direction of the electrolyte membrane 11.

The anode porous substrate 15 was prepared as follows.

A carbon paper subjected to an anode water-repellent treatment (trade name "TGP-H-090", approximately 300 $\mu$m in thickness, available from Toray Industries Inc.) was immersed in a diluted polytetrafluoroethylene (PTFE) dispersion (trade name "D-1", available from Daikin Industries, Ltd.) for 1 minute. The carbon paper was then dried in a hot air dryer in which the temperature was set to 100°C. Subsequently, the dried carbon paper was baked at 270°C in an electric furnace for 2 hours. In this manner, the anode porous substrate 15 with a PTFE content of 10 mass% was produced.

The cathode porous substrate 19 was produced in the same manner as the anode porous substrate 15 except for the use of a carbon cloth (trade name "AvCarb (trademark) 1071HCB", available from Ballard Material Products Inc.) in place of the carbon paper subjected to a hydrophobic water-repellent treatment. In this manner, the cathode porous substrate 19 with a PTFE content of 10 mass% was produced.

The anode water-repellent layer 14 was formed as follows.

First, an acetylene black powder and a PTFE dispersion (trade name "D-1" mentioned above) were mixed and stirred to prepare an ink for forming a water-repellent layer in which the PTFE content was 10 mass% of the total solid content and the acetylene black content was 90 mass% of the total solid content. The water-repellent-layer forming ink was sprayed onto one surface of the anode porous substrate 15 by a spray method using an air brush and dried in a thermostat in which the temperature was set to 100°C. Subsequently, the anode porous substrate 15 with the water-repellent-layer forming ink applied thereon was baked at 270°C in an electric furnace for 2 hours to remove the surfactant. In this manner, the anode water-repellent layer 14 was formed on the anode porous substrate 15.

The cathode water-repellent layer 18 was formed on a surface of the cathode porous substrate 19 in the same manner as described above.

The anode diffusion layer 16 comprising the anode porous substrate 15 and the anode water-repellent layer 14 and the cathode diffusion layer 20 comprising the cathode porous substrate 19 and the cathode water-repellent layer 18 were formed into a square of 60 mm x 60 mm using a punching die.

Subsequently, the anode diffusion layer 16, the CCM, and the cathode diffusion layer 20 were laminated so that the anode water-repellent layer 14 was in contact with the anode catalyst layer 32 while the cathode water-repellent layer 18 was in contact with the cathode catalyst layer 13. The resultant laminate was placed in a hot press machine in which the temperature was set to 125°C. The laminate was pressed with a pressure of 5 MPa for 1 minute to bond the anode catalyst layer and the anode diffusion layer and bond the cathode catalyst layer and the cathode diffusion layer. In this manner, a membrane electrode assembly (MEA) comprising the anode 31, the electrolyte membrane 11, and the cathode 25 was produced.

A 0.25 mm-thick sheet of ethylene propylene diene rubber (EPDM) was cut to a square of 120 mm x 120 mm. Further, a central part of the sheet was cut off so that a square opening of 62 mm x 62 mm was formed therein. In this manner, two gaskets 26 and 27 were prepared.

The gasket 26 was fitted so that the anode 31 was positioned in the central opening. Likewise, the gasket 27 was fitted so that the cathode 25 was positioned in the central opening.

The anode-side separator 17 was prepared by cutting a surface of a 2 mm-thick graphite plate to form the fuel flow channel 22 for supplying a methanol aqueous solution. Likewise, the cathode-side separator 21 was prepared by cutting a surface of a 2 mm-thick graphite plate to form the oxidant flow channel 24 for supplying an oxidant. The anode-side separator 17 7 was laminated on the anode diffusion layer 16 so that the fuel flow channel 22 was in contact with the anode diffusion layer 16. The cathode-side separator 21 was laminated on the cathode diffusion layer 20 so that the oxidant flow channel 24 was in contact with the cathode diffusion layer 20.

The fuel flow channel 22 and the oxidant flow channel 24 were 1 mm x 1 mm in cross-section. Also, the fuel flow channel 22 and the oxidant flow channel 24 were serpentine channels that meandered all around on the surfaces of the anode 31 and the cathode 25, respectively.

The MEA sandwiched by the anode-side separator 17 and the cathode-side separator 21 was further sandwiched between a pair of end plates 28 made of a 1 cm-thick stainless steel plate. A current collector plate comprising a 2 mm-thick copper plate plated with gold and an insulator plate were disposed between the separator 17 and one of the end plates 28 and between the separator 21 and the other end plate 28 in the order from each separator toward outside. In the evaluation test described below, the current collector plates were connected to an electronic load unit. The pair of end plates 28 was clamped with bolts, nuts, and springs to pressurize the separator 17, the MEA, and the separator 21. In this manner, a unit cell of a direct methanol fuel cell (DMFC) was produced. In FIG 2, illustration of the current collector plates and the insulator plates is omitted. This also holds true in FIG 1.

[Example 2]

In this example, the loading densities of the anode catalyst particles in the respective regions of the anode catalyst layer were changed by adding a pore-forming agent to the anode-catalyst-layer forming ink and changing the amount of the pore-forming agent. In this example, lithium carbonate was used as the pore-forming agent.

Specifically, in the same manner as in Example 1, the anode catalyst layer was composed of three regions of a first region, a third region, and a second region. The size of each region was set to 20 mm x 60 mm.

A first ink for forming the first region was prepared by mixing 2 g of lithium carbonate per 80 g of the anode-catalyst-layerforming ink used in Example 1 and dispersing it.

A third ink for forming the third region was prepared by mixing 5 g of lithium carbonate per 80 g of the anode-catalyst-layerforming ink used in Example 1 and dispersing it.

A second ink for forming the second region was prepared by mixing 10 g of lithium carbonate per 80 g of the anode-catalyst-layerforming ink used in Example 1 and dispersing it.

The anode catalyst layer was formed on a surface of an electrolyte membrane in the same manner as the preparation method of the first region of Example 1 except for the use of the first ink, the third ink, and the second ink. Next, the electrolyte membrane with only the anode catalyst layer formed thereon was immersed in a 1 M sulfuric acid aqueous solution for 12 hours to decompose the lithium carbonate by neutralization. Thereafter, the electrolyte membrane 11 with only the anode catalyst layer formed thereon was immersed in ion-exchange water for 6 hours. Such washing with ion-exchange water was repeated twice to remove the sulfate ions.

In this manner, the anode catalyst layer comprising the three regions with different anode-catalyst-particle loading densities was produced.

The amount of the anode catalyst particles (Pt-Ru alloy) contained in the first region per unit area was 5 mg/cm$^2$, and the loading density of the anode catalyst particles in the first region was 0.65 g/cm$^3$. The thickness of the first region was 77 $\mu$m.

The amount of the anode catalyst particles contained in the third region per unit area was 3 mg/cm$^2$, and the loading density of the anode catalyst particles in the third region was 0.38 g/cm$^3$. The thickness of the third region was 79 $\mu$m.

The amount of the anode catalyst particles contained in the second region per unit area was 1 mg/cm$^2$, and the loading

density of the anode catalyst particles in the second region was 0.13 g/cm$^3$. The thickness of the second region was 80 $\mu$m.

A fuel cell (DMFC) of Example 2 was produced in the same manner as in Example 1 except for the use of the anode catalyst layer thus produced.

[Example 3]

In this example, the loading density of the anode catalyst particles was changed by changing the support ratio of the anode catalyst particles supported on the support. The support ratio represents the mass ratio of the anode catalyst particles to the total mass of the anode catalyst particles (Pt-Ru alloy) and the support.

In this example, a Pt-Ru alloy (atomic ratio 1:1) was used as the anode catalyst particles in the same manner as in Example 1. Conductive carbon particles with an average primary particle size of 30 nm were used as the support. Also, the anode catalyst layer was composed of three regions of a first region, a third region, and a second region. The size of each region was set to 20 mm x 60 mm.

The support ratio of the anode catalyst particles of the supported anode catalyst (first supported catalyst) contained in the first region was set to 80%. The first region was produced in the same manner as the preparation method of the first region of Example 1 except for the use of the above-mentioned first supported catalyst.
The amount of the anode catalyst particles (Pt-Ru alloy) contained in the first region per unit area was 4 mg/cm$^2$, and the loading density of the anode catalyst particles in the first region was 0.63 g/cm$^3$. The thickness of the first region was 63 $\mu$m.

The support ratio of the anode catalyst particles of the supported anode catalyst (third supported catalyst) contained in the third region was set to 60%. The third region was produced in the same manner as the preparation method of the first region of Example 1 except for the use of the above-mentioned third supported catalyst.
The amount of the anode catalyst particles contained in the third region per unit area was 2 mg/cm$^2$, and the loading density of the anode catalyst particles in the third region was 0.32 g/cm$^3$. The thickness of the third region was 65 $\mu$m.

The support ratio of the anode catalyst particles of the supported anode catalyst (second supported catalyst) contained in the second region was set to 50%. The second region was produced in the same manner as the preparation method of the first region of Example 1 except for the use of the above-mentioned second supported catalyst.
The amount of the anode catalyst particles contained in the second region per unit area was 1 mg/cm$^2$, and the loading density of the anode catalyst particles in the second region was 0.17 g/cm$^3$. The thickness of the second region was 64 $\mu$m.

A fuel cell (DMFC) of Example 3 was produced in the same manner as in Example 1 except for the use of the anode catalyst layer thus produced.

[Example 4]

In this example, using a supported anode catalyst and unsupported catalyst particles, the loading density of the anode catalyst particles was changed. In this example, the second supported catalyst used in Example 3 was used as the supported anode catalyst. A fine powder of a Pt-Ru alloy (atomic ratio 1:1) was used as the unsupported catalyst particles.
Also, the anode catalyst layer was composed of three regions of a first region, a third region, and a second region. The size of each region was set to 20 mm x 60 mm.

Only the unsupported catalyst particles were used as the anode catalyst contained in the first region. Except for this, in the same manner as the first region of Example 1, the first region was prepared.
The amount of the anode catalyst particles (Pt-Ru alloy) contained in the first region per unit area was 8 mg/cm$^2$, and the loading density of the anode catalyst particles in the first region was 1.21 g/cm$^3$. The thickness of the first region was 65 $\mu$m.

Both the second supported catalyst and the unsupported catalyst particles were used as the anode catalyst contained in the third region. The mass ratio of the second supported catalyst to the unsupported catalyst particles was set to 50:50. Except for this, in the same manner as the first region of Example 1, the third region was produced.
The amount of the anode catalyst particles contained in the third region per unit area was 4.5 mg/cm$^2$, and the loading density of the anode catalyst particles in the third region was 0.69 g/cm$^3$. The thickness of the third region was 65 $\mu$m.

Only the second supported catalyst was used as the anode catalyst contained in the second region. Except for this, in the same manner as the first region of Example 1, the second region was produced.
The amount of the anode catalyst particles contained in the second region per unit area was 1 mg/cm$^2$, and the loading density of the anode catalyst particles in the second region was 0.17 g/cm$^3$. The thickness of the second region was 64 $\mu$m.

A fuel cell (DMFC) of Example 4 was produced in the same manner as in Example 1 except for the use of the anode catalyst layer thus produced.

[Comparative Example 1]

In this Comparative Example, a fuel cell with a conventional structure illustrated in FIG 1 was produced. That is, the loading density of the anode catalyst particles was made uniform throughout the anode catalyst layer.

The anode catalyst layer 12 was made a square of 60 mm x 60 mm. The supported anode catalyst used in Example 1 was used as the anode catalyst contained in the anode catalyst layer 12. Except for this, in the same manner as the third region of Example 1, the anode catalyst layer 12 was produced.
The amount of the anode catalyst particles (Pt-Ru alloy) contained in the anode catalyst layer per unit area was 3 mg/cm$^2$, and the loading density of the anode catalyst particles in the anode catalyst layer was 0.49 g/cm$^3$. The thickness of the anode catalyst layer was 61 $\mu$m.

A fuel cell of Comparative Example 1 was produced in the same manner as in Example 1 except for the use of the anode catalyst layer thus produced.

[Comparative Example 2]

In this Comparative Example, the loading density of the anode catalyst particles was also made uniform throughout the anode catalyst layer.
The unsupported catalyst particles used in Example 4 were used as the anode catalyst, and the anode catalyst layer was produced in the same manner as the preparation method of the first region of Example 1.
In the anode catalyst layer obtained, the amount of the anode catalyst particles per unit area was 8 mg/cm$^2$, and the loading density of the anode catalyst particles was 1.21 g/cm$^3$. The thickness of the anode catalyst layer was 65 $\mu$m.

A fuel cell (DMFC) of Comparative Example 2 was produced in the same manner as in Example 1 except for the use of the anode catalyst layer thus produced.

[Comparative Example 3]

In this Comparative Example, the loading density of the anode catalyst particles was also made uniform throughout the anode catalyst layer.
The second supported catalyst (the support ratio of the anode catalyst particles: 50%) used in Example 3 was used as the anode catalyst, and the anode catalyst layer was produced in the same manner as the second region of Example 1.
In the anode catalyst layer obtained, the amount of the anode catalyst particles per unit area was 1 mg/cm$^2$, and the loading density of the anode catalyst particles in the anode catalyst layer was 0.17 g/cm$^3$. The thickness of the anode catalyst layer was 64 $\mu$m.

[Evaluation test]
Using the fuel cell of Example 1 and the fuel cells of Comparative Examples 1 to 2, the amount of methanol crossover during power generation and the power generation performance were evaluated, and from the obtained result, the fuel utilization efficiency was calculated.

The power generating conditions for these fuel cells were as follows. A methanol aqueous solution of 4 mol/L was used as the fuel. The fuel was supplied to the anode at a flow rate of 0.3 cm$^3$/min by using a tubular pump. Unhumidified air was supplied to the cathode at a flow rate of 300 cm$^3$/min while the flow rate was controlled by a massflow controller. Using an electric heating wire and a temperature controller, the cell temperature was controlled at 60°C. Thereafter, the fuel cell was connected to an electronic load unit "PLZ164WA" (available from Kikusui Electronics Corporation), and operated to continuously generate power while the current density was controlled at a constant level (200 mA/cm$^2$).

The gas/liquid mixture fluid comprising carbon dioxide and the methanol aqueous solution containing methanol not used in power generation, discharged from the anode, was introduced into a gas collector filled with pure water. In this manner, the gas and the liquid methanol were collected in 1 hour. At this time, the gas collector was cooled with an ice water bath.
Thereafter, the amount of methanol in the gas collector was measured by gas chromatography, and the material mass balance of the anode was calculated to determine the amount of methanol crossover (amount of MCO). Specifically, the amount of MCO was calculated by subtracting, from the amount of methanol supplied to the anode, the amount of methanol discharged and collected and the amount of methanol consumed at the anode determined from the amount of current produced. The amount of MCO was expressed as a value of current which would be produced if the methanol in an amount corresponding to the amount of MCO were oxidized. The fuel utilization rate was determined from the following calculation formula (A).

Fuel utilization rate = (Current produced) / (Current produced + Current value converted from the amount of

MCO)　　(A)

Table 1 shows the above results. Table 1 also shows the total amounts of catalyst (Pt-Ru alloy) contained in the anode catalyst layer.

[Table 1]

|  | Total amount of catalyst (mg) | Voltage produced (V) | Fuel utilization rate (%) |
|---|---|---|---|
| Example 1 | 108 | 0.44 | 81.5 |
| Example 2 | 108 | 0.46 | 80.2 |
| Example 3 | 84 | 0.45 | 82.0 |
| Example 4 | 162 | 0.48 | 83.6 |
| Comp. Example 1 | 144 | 0.36 | 73.0 |
| Comp. Example 2 | 288 | 0.40 | 83.3 |
| Comp. Example 3 | 36 | 0.31 | 70.5 |

As is clear from Table 1, the fuel cells of Example 1 and Example 2, using the same anode catalyst particles (Pt-Ru) as that of Comparative Example 1, could provide high fuel utilization rates and high voltages, compared with the fuel cell of Comparative Example 1. This result can be attributed to small MCO amount in the fuel cells of Example 1 and Example 2.

In a comparison of the results of the fuel cells of Examples 1 to 3, the fuel cell of Example 3, in which the amount of the anode catalyst particles used is smaller by approximately 22% than that of the fuel cell of Example 1, has voltage and fuel utilization rate that are equal to or higher than the voltage and fuel utilization rate of the fuel cell of Example 1.

As such, by changing the support ratio of the anode catalyst particles of the supported anode catalyst contained in each region of the anode catalyst layer, as in the fuel cell of Example 3, a fuel cell with good voltage produced and good fuel utilization rate can be produced at low costs.

The fuel cell of Example 4, using an increased amount of the anode catalyst particles, exhibited a further improvement in the voltage produced and fuel utilization rate, compared with the fuel cell of Example 1.

In a comparison between the fuel cell of Comparative Example 3 and the fuel cell of Example 4, there was a clear difference in power generation performance and fuel utilization rate between the fuel cell of Comparative Example 3 and the fuel cell of Example 4. In the fuel cell of Example 4, the effect of the unsupported catalyst included in the first region of the anode catalyst layer to heighten the loading density of the anode catalyst particles is significant.

In the case of the fuel cell of Comparative Example 2, the fuel utilization rate is equivalent to that of the fuel cell of Example 4, but the voltage produced is lower than those of the fuel cells of Examples 1 to 4. This result can be attributed to the fact that in the fuel cells of Examples 1 to 4, the loading density of the anode catalyst particles in the anode catalyst layer was lowered from upstream of the fuel flow channel toward downstream, thereby enabling optimization of the fuel diffusion throughout the anode catalyst layer and resulting in decreased concentration overvoltage.

As described above, the fuel cell including the above-described anode catalyst layer can provide higher power generation performance and fuel utilization rate than conventional fuel cells, and can therefore provide high energy conversion efficiency.

[Industrial Applicability]

The direct oxidation fuel cell is useful as the power source for portable small electronic devices such as, for example, notebook personal computers, cellular phones, and personal digital assistants (PDAs). The direct oxidation fuel cell is also applicable to such uses as the power source for electric scooters.

[Reference Signs List]

10 Fuel Cell
11 Electrolyte Membrane
12, 32 Anode Catalyst Layer
13 Cathode Catalyst Layer
14 Anode Water-Repellent Layer
15 Anode Porous Substrate
16 Anode Diffusion Layer
17 Anode-Side Separator
18 Cathode Water-Repellent Layer
19 Cathode Porous Substrate
20 Cathode Diffusion Layer
21 Cathode-Side Separator
22 Fuel Flow Channel
23,31 Anode
24 Oxidant Flow Channel
25 Cathode
26, 27 Gasket
28 End Plate
33 First Region
34 Second Region
35 Third Region
36 Fuel Inlet
37 Fuel Outlet
70 Spray Coater
71 Tank
72 Ink
73 Spray Gun
74 Stirrer
75 Open/Close Valve
76 Gas Pressure regulator
77 Gas Flow Rate controller
78 Actuator
79,80 Mask
81 Heater

**Claims**

1. A direct oxidation fuel cell comprising at least one unit cell which includes: a membrane electrode assembly comprising an anode, a cathode, and an electrolyte membrane interposed between the anode and the cathode; an anode-side separator in contact with the anode; and a cathode-side separator in contact with the cathode,
   the anode-side separator having a fuel flow channel for supplying a fuel to the anode,
   the cathode-side separator having an oxidant flow channel for supplying an oxidant to the cathode,
   the anode including an anode catalyst layer in contact with the electrolyte membrane and an anode diffusion layer in contact with the anode-side separator,
   the anode catalyst layer including anode catalyst particles and a polymer electrolyte, and
   the loading density of the anode catalyst particles in the anode catalyst layer being higher upstream than downstream of the fuel flow channel.

2. The direct oxidation fuel cell in accordance with claim 1, wherein the loading density of the anode catalyst particles decreases in stages from upstream of the fuel flow channel toward downstream.

3. The direct oxidation fuel cell in accordance with claim 1, wherein the loading density of the anode catalyst particles decreases continuously from upstream of the fuel flow channel toward downstream.

4. The direct oxidation fuel cell in accordance with claim 1, wherein a part of the anode catalyst layer facing an upstream part of the fuel flow channel has a high loading density region in which the loading density of the anode catalyst particles is 0.5 to 2 g/cm$^3$.

5. The direct oxidation fuel cell in accordance with claim 4, wherein the anode catalyst layer has the high loading density region in a region facing 1/6 to 1/3 of the entire length of the fuel flow channel upstream of the fuel flow channel.

6. The direct oxidation fuel cell in accordance with claim 1, wherein a part of the anode catalyst layer facing a downstream part of the fuel flow channel has a low loading density region in which the loading density of the anode catalyst particles is 0.1 to 1 g/cm$^3$.

7. The direct oxidation fuel cell in accordance with claim 1, wherein the anode catalyst layer includes at least one of: a supported catalyst comprising a conductive carbon material and the anode catalyst particles supported on the conductive carbon particles; and the anode catalyst particles not supported on the conductive carbon material.

8. The direct oxidation fuel cell in accordance with claim 7, wherein the anode catalyst layer includes the supported catalyst, and the support ratio of the anode catalyst particles to the supported catalyst is higher upstream than downstream of the fuel flow channel.

9. The direct oxidation fuel cell in accordance with claim 8, wherein the support ratio of the anode catalyst particles to the supported catalyst in a part of the anode catalyst layer facing an upstream part of the fuel flow channel is 60 to 99%, and the support ratio of the anode catalyst particles to the supported catalyst in a part of the anode catalyst layer facing a downstream part of the fuel flow channel is 20 to 80%.

10. The direct oxidation fuel cell in accordance with claim 7, wherein the mass ratio of the anode catalyst particles not supported on the conductive carbon material to the total of the supported catalyst and the anode catalyst particles not supported on the conductive carbon material is higher upstream than downstream of the fuel flow channel.

11. The direct oxidation fuel cell in accordance with claim 10, wherein the mass ratio of the anode catalyst particles not supported on the conductive carbon material to the total of the supported catalyst and the anode catalyst particles not supported on the conductive carbon material in a part of the anode catalyst layer facing an upstream part of the fuel flow channel is 5 to 99 mass%, and
the mass ratio of the anode catalyst particles not supported on the conductive carbon material to the total of the supported catalyst and the anode catalyst particles not supported on the conductive carbon material in a part of the anode catalyst layer facing a downstream part of the fuel flow channel is 1 to 90 mass%.

12. The direct oxidation fuel cell in accordance with claim 7, wherein the amount of the conductive carbon particles contained in the anode catalyst layer is uniform throughout the anode catalyst layer.

13. The direct oxidation fuel cell in accordance with claim 7, wherein the conductive carbon particles have an average particle size of 5 to 50 nm.

14. The direct oxidation fuel cell in accordance with claim 1, wherein the anode catalyst particles comprise at least one selected from the group consisting of platinum simple substance and platinum alloys.

15. The direct oxidation fuel cell in accordance with claim 1, wherein the anode catalyst particles have an average particle size of 1 to 20 nm.

16. The direct oxidation fuel cell in accordance with claim 1, wherein the anode catalyst layer has a uniform thickness throughout the anode catalyst layer.

17. The direct oxidation fuel cell in accordance with claim 16, wherein the anode catalyst layer has a thickness of 20 to 100 $\mu$m.

F I G. 1

F I G. 2

FIG. 3

EP 2 337 127 A1

F I G. 4

<table>
<tr><td colspan="2"><b>INTERNATIONAL SEARCH REPORT</b></td><td>International application No.<br>PCT/JP2010/004189</td></tr>
</table>

| A. CLASSIFICATION OF SUBJECT MATTER |
|---|
| $H01M4/86$(2006.01)i, $H01M4/88$(2006.01)i, $H01M8/10$(2006.01)i |

According to International Patent Classification (IPC) or to both national classification and IPC

| B. FIELDS SEARCHED |
|---|
| Minimum documentation searched (classification system followed by classification symbols)<br>H01M4/86, H01M4/88, H01M8/10 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 2002-110191 A  (Toyota Central Research and Development Laboratories, Inc.),<br>12 April 2002 (12.04.2002),<br>claims; paragraphs [0020], [0021]<br>(Family: none) | 1-7,12-17<br>8-11 |
| Y<br>A | JP 7-6772 A  (Mitsubishi Electric Corp.),<br>10 January 1995 (10.01.1995),<br>claims; paragraphs [0018], [0019]; fig. 2<br>(Family: none) | 1-7,12-17<br>8-11 |
| Y | JP 6-150944 A  (Toshiba Corp.),<br>31 May 1994 (31.05.1994),<br>claims<br>(Family: none) | 2,3 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 August, 2010 (20.08.10) | Date of mailing of the international search report<br>31 August, 2010 (31.08.10) |
|---|---|
| Name and mailing address of the ISA/<br>Japanese Patent Office | Authorized officer |
| Facsimile No. | Telephone No. |

Form PCT/ISA/210 (second sheet) (July 2009)

EP 2 337 127 A1

| | INTERNATIONAL SEARCH REPORT | International application No. |
|---|---|---|
| | | PCT/JP2010/004189 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-32515 A  (Seiko Epson Corp.),<br>03 February 2005 (03.02.2005),<br>entire text<br>(Family: none) | 1-17 |
| A | JP 2005-259650 A  (Honda Motor Co., Ltd.),<br>22 September 2005 (22.09.2005),<br>entire text<br>(Family: none) | 1-17 |
| A | JP 2009-129842(Aisin Seiki Co., Ltd.)<br>11 June 2009 (11.06.2009),<br>entire text<br>& WO 2009/068958 A1 | 1-17 |

Form PCT/ISA/210 (continuation of second sheet) (July 2009)

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002110191 A
- JP 2009009724 A